# EUROPEAN PATENT SPECIFICATION

(11) **EP 1 506 949 B1**
(45) Date of publication and mention of the grant of the patent: **20.06.2012**
(21) Application number: 03723358.2
(22) Date of filing: 14.05.2003
(51) Int. Cl.: C04B 35/628

(54) **METHOD FOR PRODUCING COMPOSITE MATERIAL**
VERFAHREN ZUR HERSTELLUNG VON VERBUNDMATERIAL
PROCEDE POUR REALISER UN MATERIAU COMPOSITE

(30) Priority: 23.05.2002 JP 2002149014
(43) Date of publication of application: 16.02.2005
(73) Proprietor: NGK Insulators, Ltd., Nagoya-shi, Aichi-ken 467-8530 (JP)
(72) Inventor: ICHIKAWA, Shuichi, c/o NGK INSULATORS, LTD., Nagoya-shi, Aichi 467-8530 (JP)
(74) Representative: Paget, Hugh Charles Edward
(86) International application number: PCT/JP2003/005971
(87) International publication number: WO 2003/099742

(56) References cited:
- EP-A- 1 081 118
- EP-A1- 1 081 118
- JP-A- 1 224 256
- JP-A- 2002 060 279
- JP-A- 2002 060 279
- DATABASE WPI Section Ch, Week 198942 Thomson Scientific, London, GB; Class L02, AN 1989-304300 XP002491371 EMA T; KITAHARA A; SAWADA S: "MATERIAL REFRACTORY COMPRISE METAL SILICON POWDER PITCH SPECIFIC MINIMUM SOFTEN TEMPERATURE GREEN COKE" -& JP 01 224256 A (KANSAI NETSUKAGAKU KK) 7 September 1989 (1989-09-07)

## Description

### Technical Field

The present invention relates to a method of manufacturing a composite material, which comprises manufacturing the composite material from raw materials including metal silicon and ceramic, particularly to a method of manufacturing a composite material, in which pinhole defects are not easily generated in the composite material.

### Background Art

A porous or dense metal-silicon-containing material containing metal silicon, for example, a material in which a metal silicon-silicon carbide composite material containing metal silicon and silicon carbide as a main phase is a main component, has a high strength, and is superior in resistances to heat and oxidation, and thermal conductivity, and has therefore been used in various applications such as kiln tools, jigs for thermal treatments, honeycomb filters and the like at present.

This composite material can be manufactured, in general, by kneading and pugging raw materials including metal silicon and ceramic such as silicon carbide, thereafter performing extrusion to form a formed body having a predetermined shape, and thereafter firing the body. For example, in a honeycomb structure for use in a diesel particulate filter (DPF) and the like, after forming a formed body having a honeycomb shape having a large number of cells partitioned by partition walls, the body is fired, and accordingly the structure can be manufactured.

However, coarse pinhole defects are sometimes generated in the composite material manufactured using metal silicon and ceramic as main raw materials. If the defects are generated, an original function of the composite material is sometimes impaired. For example, when the pinhole defects are generated in the partition walls of the honeycomb structure, the partition walls do not function. In the DPF using porous partition walls as the filter, soot to be trapped (i.e., soot-like matters) leaks through the pinhole defects on an exhaust side, and cannot be trapped, and a problem occurs that defective articles are made. Therefore, there has been a demand for a method of manufacturing a composite material in which the pinhole defects are not easily generated.

JP-A-1-224256 describes a making a refractory by sintering a refractory material which includes 5-40% of a material which consists of metal silicon powder coated with pitch and green pitch cokes containing fixed carbon. The refractories are said to have high strength, wear resistance and heat resistance.

EP-A-1291061 describes manufacture of a honeycomb structure, for use as a filter, by kneading a raw material containing SiC powder, metal Si powder and water, and extrusion molding a honeycomb structure. The structure is fired at 1550°C.

EP-A-1081118 describes manufacture of dense silicon nitride, by forming a slurry of silicon powder in water, adding Y₂O₃ powder and MgO powder as sintering aid, and milling the slurry to obtain fine particle size of silicon. The slurry includes an Si-polymer such as polysiloxane to inhibit oxidation of silicon. The slurry is dried, granulated, molded by dry pressing, nitrided and sintered. Relative density of 99% is obtained.

### Disclosure of the Invention

The present invention has been developed in consideration of these situations, and provides a method of manufacturing a composite material in which the above-described pinhole defects are not easily generated.

According to the present invention, there is provided a method of manufacturing a composite material, as set out in claim 1.

In the present invention, the content of metal silicon relative to the total content of metal silicon and ceramic in the raw material is preferably 5% by mass or more, and the method includes a step of forming the raw material into a predetermined shape by steps including a kneading step, a pugging step, and an extruding step. The method also includes a firing step of firing the raw material, and preferably a firing temperature in the firing step is 1400 to 1600°C. The composite material is a porous body of honeycomb shape having a porosity of 30 to 90%. The ceramic included in the raw material preferably includes silicon carbide. The organic matter is preferably a resin, and the organic matter is also preferably a silicon-containing compound.

### Best Mode for Carrying out the Invention

A method of manufacturing a composite material according to the present invention will be described hereinafter in detail, but the present invention is not limited to the following embodiment.

A raw material according to the present invention includes metal silicon and ceramic, and important characteristics of the present invention lie in that the raw material includes metal silicon whose surface is coated with an organic matter.

As a result of detailed studies of causes for generation of pinhole defects in manufacturing the composite material using the raw material including metal silicon, the present inventors have found that, in general, during the manufacturing, water is added to the raw material, and kneading, pugging, and extruding are performed, and in this case, by use of metal silicon as the raw material, metal silicon reacts with water as in Formula (1) to generate hydrogen. Furthermore, it has been found that when hydrogen is generated in kneading, pugging, and extruding steps, a generated hydrogen gas gathers to sometimes form closed pores in a formed body, and this is one of causes to finally generate coarse pinhole defects of about 500 to 1000 µm. Moreover, it has been found out that metal silicon in the raw material is coated with the organic matter to thereby suppress the reaction with water, accordingly hydrogen is inhibited from being generated, and the pinhole defects are not easily generated.

Si+2H₂O → Si(OH)₂+H₂ Formula (1)

In the present invention, the content of metal silicon is not especially limited. When metal silicon is included in the raw material, the generation of hydrogen is suppressed by the present invention, and the generation of the pinhole defects is suppressed. However, when more metal silicon is included in the raw material, an effect of the present invention is further clarified. Therefore, when using the raw material including 5% by mass or more, further 10% by mass or more, especially 15% by mass or more of metal silicon with respect to a total of 100% by mass of metal silicon and ceramic, a larger effect is preferably obtained by the use of the manufacturing method of the present invention.

In the present invention, the shape of metal silicon for use as the raw material is not especially limited, but, in general, shapes of particles, needles or the like are microscopically preferable, and powder body shapes are macroscopically preferable. When metal silicon has a shape of a powder body, the body is coated with the organic matter, and this produces an effect that the powder body can be inhibited from being aggregated.

In the organic matter for use in the present invention, there is not any special limitation to a type as long as metal silicon can be coated. However, from viewpoints that contact of metal silicon with water be inhibited and mutual aggregation of metal silicon be inhibited, such an organic matter that the surface of metal silicon coated with the matter becomes hydrophobic is preferable. In general, when manufacturing the composite material of ceramic, metal and the like, a calcining step and/or a firing step for removing a binder and the like is performed in many cases. Therefore, the organic matter is preferably removed in the calcining step and/or the firing step, especially in the calcining step, for example, in the calcining step performed, for example, at 550°C or less. Alternatively, preferably the organic matter does not adversely affect the produced composite material, even when a part or all of the matter remains in the composite material. For example, an element which is burnt or oxidized and easily removed in the firing step, the same element as that included in the composite material or the like is a preferable main component, the element selected, for example, from carbon, hydrogen, oxygen, and silicon is preferably the main component, and silicon is especially preferably included. Concrete examples include aliphatic hydrogen carbide, fatty acid, fatty acid ester, silicone resin such as silicone oil, silicon-containing compound such as silane-based coupling agent, and various polymers, and the silicon-containing compound is especially preferable.

An amount of the organic matter for use in the present invention is not especially limited, the organic matter is usable in an amount with which metal silicon for use can be coated to such an extent that the effect of the present invention is produced, and the amount is changeable with an amount or a surface area of metal silicon. For example, 0.1 to 10 parts by mass, more preferably 0.2 to 5 parts by mass, further preferably 0.5 to 3 parts by mass are preferably included with respect to 100 parts by mass of metal silicon. In the present invention, all of metal silicon in the raw material is preferably coated with the organic matter, but all of metal silicon does not have to be necessarily coated, metal silicon is coated to such an extent that the effect of the present invention is produced, and then coated metal silicon is usable together with uncoated metal silicon.

A method of coating the surface of metal silicon with the organic matter is not especially limited, but, for example, a slurry or a solution in which the organic matter for use in the coating is dispersed or dissolved beforehand is prepared, and the raw material is dispersed in the slurry or the solution, and thereafter filtered and/or dried. Alternatively, a method in which the slurry or the solution is added at the time of crushing of metal silicon or the like is considered.

The ceramic included in the raw material according to the present invention is not especially limited, as long as the ceramic is capable of forming the composite material with metal silicon. Concrete examples of a preferable ceramic include silicon carbide, silicon nitride, and aluminum nitride. The examples of an oxide base include alumina, zirconia, yttria, mullite, cordierite, aluminum titanate and the like.

In the present invention, in addition to metal silicon and ceramic, various additives can be added to the raw material. For example, waxes, binders such as various polymers, dispersant, pore former, water and the like may be appropriately added in accordance with purposes, applications, types of raw materials and the like.

Next, preferable manufacturing steps in the manufacturing method of the present invention will be described. In the present invention, first, for example, methyl cellulose and/or hydroxypropoxyl methyl cellulose is added as a binder to a metal silicon powder coated with the above-described organic matter, and a ceramic powder, further surfactant and water are added, and this raw material is mixed. This material is kneaded using a kneader in a kneading step so that a plastic clay can be obtained. The clay is pugged by a pug mill such as a vacuum pug mill, and thereby degassed in a pug milling step, and, for example, a cylindrical preliminary formed body can be obtained. This body is extruded by an extruder in an extruding step, and accordingly a formed body having a a honeycomb shape is obtained. The formed body having this shape may be obtained by continuously performing a series of kneading, pugging, and extruding steps by a continuous type extruder. The formed body obtained in this manner is dried, thereafter calcined to remove the binder and the like, and fired in a firing step, and accordingly a composite material can be manufactured. A firing temperature differs with the type of the ceramic for use, but the body can be fired, for example, at 1400 to 1600°C.

The composite material is manufactured by the steps including the kneading, pugging, and extruding steps as described above, and when the pugging step is performed with a reduced pressure or in vacuum, generated hydrogen easily generate closed pores in the raw material. Therefore, when manufacturing the composite material by the steps including the kneading, pugging, and extruding steps, the manufacturing method of the present invention is especially effective. Since the honeycomb structure has a large number of cells partitioned by partition walls and extending through an axial direction, the structure has a large number of thin partition walls, functions of the walls are easily impaired by holed defects, and therefore the manufacturing method of the present invention is especially effective.

Moreover, when the composite material is manufactured by the above-described series of steps, the composite material can be formed into a porous body. When the composite material is a porous body, especially when the material is a porous body having a porosity of 30 to 90%, the material is sometimes used in a filter and the like. Also in this case, the pinhole defects raise a large problem, the function of the filter is largely impaired, and therefore the manufacturing method of the present invention is effective. Especially, when the porous body is used as a DPF, the body is formed into the honeycomb structure in many cases. Since the structure has a large number of porous partition walls, generation of coarse pinhole defects results in a problem that soot and the like to be trapped, discharged from a diesel engine, leak on an exhaust side. Therefore, the manufacturing method of the present invention for suppressing the pinhole defects is especially effective. It is to be noted that when the composite material is used in a filter such as a DPF, the formed body formed in the extruding step is formed into a honeycomb shape, and further it is preferable to include a plugging step of alternately plugging adjacent cells in end surfaces on opposite sides. Furthermore, formed plugging portions are preferably fired, and therefore the plugging step is preferably performed before the firing step.

### (Examples and Comparative Examples)

The present invention will further be described hereinafter in detail based on examples, but the present invention is not limited to these examples.

### (Example 1)

To 100 parts by mass in total of a raw material including: 80 parts by mass of a silicon carbide powder having an average diameter of 33.0 µm; and 20 parts by mass of a metal silicon powder having an average diameter of 4 µm and including surfaces of particles, coated with a silicone resin, methyl cellulose and hydroxypropoxyl methyl cellulose, surfactant and water were added, and a plastic clay was prepared. This clay was degassed by a vacuum pug mill, preliminarily formed into a cylindrical shape, extruded, and dried by microwave and hot air to obtain a formed body having a honeycomb structure having: a partition wall thickness of 380 µm; a cell density (the number of cells per unit sectional area) of about 31.0 cells/cm² (200 cells/square inch); a square section having one side of 35 mm; and a length of 152 mm. In the formed body, one end portion of a cell on an opposite side of an adjacent cell was plugged with a material similar to that used in manufacturing the honeycomb structure so that end surfaces exhibited checkered patterns. After drying, the body was degreased at 400°C to obtain a precursor. The obtained precursor was fired at 1450°C to obtain the honeycomb structure for a DPF. With respect to the obtained honeycomb structure, holed defects in the honeycomb structure were detected by a method described in Japanese Patent Publication No. 5-658. That is, by a method in which soot was passed via one end surface of the honeycomb structure, and defects were inspected from an image of particles trapped by a screen attached to the other end surface, 1000 honeycomb structures were inspected. As a result, there were 95% of passed articles including A ranked articles having zero detected holed defect and B ranked articles from each of which three or less defects were detected.

### (Comparative Example)

A honeycomb structure for a DPF was prepared in the same manner as in Example 1 except that metal silicon uncoated with a silicone resin, that is, untreated metal silicon was used, and pinhole defects were inspected. Detected A, B ranked passed articles were 85%.

### Industrial Applicability

As described above, according to a manufacturing method of the present invention, pinhole defects are inhibited from being generated, and a quality level of a composite material can be enhanced. Therefore, the manufacturing method of the present invention is preferably usable in manufacturing a composite material including metal silicon and ceramic, for use in various applications such as kiln tools, jigs for thermal treatments, honeycomb filters and the like.

## Claims

1. A method of manufacturing a composite material porous body, which comprises manufacturing the composite material from a raw material including metal silicon and ceramic, wherein the raw material includes water and metal silicon and wherein the method includes a step of forming the raw material into a predetermined shape by steps including a kneading step and an extruding step, followed by a firing step of firing the raw material,
wherein the composite material body manufactured from the raw material has a honeycomb shape,
**characterized in that** the composite material porous body has a porosity of 30 to 90%, **in that** a pugging step is included after the kneading step and before the extruding step and **in that** the surface of the metal silicon is coated with an organic matter.

2. The method of manufacturing the composite material according to claim 1, wherein the content of metal silicon relative to the total content of metal silicon and ceramic in the raw material is 5% by mass or more.

3. The method of manufacturing the composite material according to claim 1 or 2, wherein the firing temperature in the firing step is 1400 to 1600°C.

4. The method of manufacturing the composite material according to any one of claims 1 to 3, wherein the ceramic included in the raw material includes silicon carbide.

5. The method of manufacturing the composite material according to any one of claims 1 to 4, wherein the organic matter is a resin.

6. The method of manufacturing the composite material according to any one of claims 1 to 5, wherein the organic matter is a silicon-containing compound.

## Patentansprüche

1. Verfahren zur Herstellung eines porösen Körpers aus Verbundmaterial, das das Herstellen des Verbundmaterials aus einem Rohmaterial umfasst, das metallisches Silicium und Keramik umfasst, worin das Rohmaterial Wasser und metallisches Silicium umfasst und worin das Verfahren einen Schritt des Ausbildens des Rohmaterials zu einer vorbestimmten Form durch Schritte umfasst, die einen Knetschritt und einen Extrudierschritt umfassen, worauf ein Brennschritt des Brennens des Rohmaterials folgt,
worin der aus dem Rohmaterial hergestellte Verbundmaterialkörper eine Wabenform aufweist,
**dadurch gekennzeichnet, dass** der poröse Körper aus Verbundmaterial eine Porosität von 30 bis 90 % aufweist, dass ein Auffüllungsschritt nach dem Knetschritt und vor dem Extrudierschritt eingeschlossen ist und dass die Oberfläche des metallischen Siliciums mit einem organischen Stoff beschichtet ist.

2. Verfahren zur Herstellung eines Verbundmaterials nach Anspruch 1, worin der Gehalt des metallischen Siliciums bezogen auf den Gesamtgehalt von metallischem Silicium und Keramik im Rohmaterial 5 Massen-% oder mehr beträgt.

3. Verfahren zur Herstellung eines Verbundmaterials nach Anspruch 1 oder 2, worin die Brenntemperatur im Brennschritt 1400 bis 1600 °C beträgt.

4. Verfahren zur Herstellung eines Verbundmaterials nach einem der Ansprüche 1 bis 3, worin die im Rohmaterial enthaltene Keramik Siliciumcarbid umfasst.

5. Verfahren zur Herstellung eines Verbundmaterials nach einem der Ansprüche 1 bis 4, worin der organische Stoff ein Harz ist.

6. Verfahren zur Herstellung eines Verbundmaterials nach einem der Ansprüche 1 bis 5, worin der organische Stoff eine siliciumhältige Verbindung ist.

## Revendications

1. Procédé de fabrication d'un corps poreux constitué d'un matériau composite, qui comprend la fabrication du matériau composite à partir d'un matériau brut comprenant du silicium métallique et de la céramique, dans lequel le matériau brut comprend de l'eau et du silicium métallique et dans lequel le procédé comprend une étape de préparation du matériau brut selon une forme prédéterminée par les étapes comprenant une étape de malaxage et une étape d'extrusion, suivies d'une étape de cuisson consistant à cuire le matériau brut,
dans lequel le corps constitué d'un matériau composite fabriqué à partir du matériau brut a une forme en nids d'abeille,
**caractérisé en ce que** le corps poreux constitué d'un matériau composite a une porosité de 30 à 90 %, **en ce qu'**une étape de pétrissage est incluse après l'étape de malaxage et avant l'étape d'extrusion et **en ce que** la surface du silicium métallique est revêtue d'une matière organique.

2. Procédé de fabrication du matériau composite selon la revendication 1, dans lequel la teneur du silicium métallique par rapport à la teneur totale du silicium métallique et de la céramique dans le matériau brut est supérieure ou égale à 5 % en masse.

3. Procédé de fabrication du matériau composite selon la revendication 1 ou 2, dans lequel la température de cuisson de l'étape de cuisson est de 1 400 à 1 600 °C.

4. Procédé de fabrication du matériau composite selon l'une quelconque des revendications 1 à 3, dans lequel la céramique incluse dans le matériau brut comprend du carbure de silicium.

5. Procédé de fabrication du matériau composite selon l'une quelconque des revendications 1 à 4, dans lequel la matière organique est une résine.

6. Procédé de fabrication du matériau composite selon l'une quelconque des revendications 1 à 5, dans lequel la matière organique est un composé contenant du silicium.
